# EUROPÄISCHE PATENTSCHRIFT

(11) **EP 2 836 070 B1**
(45) Veröffentlichungstag und Bekanntmachung des Hinweises auf die Patenterteilung: **24.10.2018**
(21) Anmeldenummer: 13716272.3
(22) Anmeldetag: 10.04.2013
(51) Int. Cl.: A01N 25/10, A01N 25/34, A01N 59/16, C09D 5/14

(54) **VERBUNDMATERIAL MIT EINEM TRÄGERMATERIAL UND EINEM ANTIMIKROBIELL WIRKSAMEN AGENS**
COMPOSITE MATERIAL COMPRISING A CARRIER MATERIAL AND AN ANTIMICROBIAL AGENT
MATÉRIEL COMPOSITE COMPRENANT UN MATÉRIEL DE SUPPORT ET UN AGENT ANTIMICROBIEL

(30) Priorität: 10.04.2012 DE 102012103064
(43) Veröffentlichungstag der Anmeldung: 18.02.2015
(73) Patentinhaber: Amistec GmbH & Co. KG, 6345 Kössen (AT)
(72) Erfinder: LACKNER, Maximilian, A-2320 Schwechat (AT); GUGGENBICHLER, Joseph-Peter, A-6345 Kössen (AT)
(74) Vertreter: Heubeck, Christian
(86) Internationale Anmeldenummer: PCT/EP2013/057506
(87) Internationale Veröffentlichungsnummer: WO 2013/153124

(56) Entgegenhaltungen:
- WO-A1-2009/026725
- WO-A2-2011/129982
- DE-A1- 10 315 720
- US-A1- 2002 146 385
- US-A1- 2006 068 024

## Beschreibung

Die Erfindung betrifft ein Verbundmaterial mit wenigstens einem Trägermaterial und wenigstens einem antimikrobiell wirksamen Agens aus der Gruppe der Metalle und Metallverbindungen. Die Erfindung betrifft weiterhin ein Verfahren zum Herstellen eines Verbundmaterials, bei welchem ein Trägermaterial mit wenigstens einem antimikrobiell wirksamen Agens aus der Gruppe der Metalle und Metallverbindungen versehen wird.

Oberflächen lassen sich nach unterschiedlichen Verfahren antimikrobiell ausstatten. Neben Bioziden werden häufig Metalle und Metallverbindungen zu diesem Zweck eingesetzt und zur antimikrobiellen Ausstattung unterschiedlicher Verbundmaterialien eingesetzt. Nach der so genannten oligodynamischen Reihe ist eine Vielzahl an Metallionen antimikrobiell wirksam, darunter beispielsweise Ag⁺, Cd²⁺, Hg²⁺ und Cu²⁺. Silber wird neben Kupfer besonders häufig eingesetzt, wobei mehrere prinzipielle Möglichkeiten bekannt sind. Bei der ersten Möglichkeit wird das elementare Metall mit einer großen Oberfläche bereitgestellt, sodass sich die entsprechenden Metallionen an der Oberfläche bilden können. Häufig werden daher Nanopartikel, geschäumtes Metall oder auf einem Träger fixierte Nanopartikel verwendet. Die zweite Möglichkeit umfasst die Bereitstellung von löslichen Metallsalzen, die beispielsweise in Zeolithen oder direkt im Verbundmaterial eingebracht sind. Weiterhin ist es möglich, antimikrobiell wirksame Metallionen über die elektrochemische Spannungsreihe darzustellen. Hierzu können vergleichsweise unedlere Metalle wie Silber oder Kupfer galvanisch mit einem edleren Metall wie beispielsweise Platin gekoppelt werden.

Weiterhin ist es bekannt, Metallverbindungen wie etwa Übergangsmetalloxide einzusetzen, um Verbundmaterialien antimikrobiell auszustatten. Die Übergangsmetalloxide bilden bei Kontakt mit Wasser Metallsäuren, sodass als antimikrobiell wirksames Agens mittelbar H₃O⁺-Ionen an der Oberfläche des Verbundmaterials gebildet werden. Derartige Metallverbindungen liefern unter verschiedenen Bedingungen bessere Ergebnisse als Metalle oder Metallionen, da die Metallsäuren schlecht wasserlöslich sind und zur Aufrechterhaltung der antimikrobiellen Wirkung keine permanente Freisetzung von Metallionen erfolgen muss. Stattdessen kann die Metallverbindungen dazu benutzt werden, eine bei Kontakt mit Wasser saure und damit biozid wirksame Oberfläche zu erzeugen.

Die Wirksamkeit derartiger antimikrobieller Metalle bzw. Metallionen und Metallverbindungen soll üblicherweise dadurch gesteigert werden, dass die Verbundmaterialien, in denen die antimikrobiell wirksamen Metalle und Metallverbindungen vorliegen, möglichst hydrophob, das heißt wasserabweisend ausgebildet sind, um die Benetzbarkeit der Oberflächen der Verbundmaterialien zu verringern und um Bakterien das lebensnotwendige Wasser zu entziehen. Als Trägermaterial derartiger Verbundmaterialien kommen daher üblicherweise möglichst hydrophobe Polymere wie Silikone, Polypropylen (PP), Acrylnitril-Butadien-Styrol (ABS), Polycarbonat (PC) oder Polystyrol (PS) zum Einsatz.

Es zeigt sich im Praxiseinsatz jedoch, dass die Wirksamkeit derartiger Verbundmaterialien in verschiedenen Anwendungen relativ gering ist.

Aus der DE 103 15 720 A1 ist ein Beschichtungsmaterial bestehend aus einer Lackbase, Silberpartikeln und einem hydrophilen Füllstoff bekannt.

Die WO 2009/026725 A1 offenbart eine antimikrobielle Zusammensetzung, die Metallionen sowie ein hydrophiles, oberflächenmodifizierendes Agens enthält.

Die US 2006/068024 A1 offenbart eine Zubereitung, die ein Polymer, Silber und ein Benetzungsmittel enthält.

Aus der US 2002/146385 A1 ist ein antimikrobieller Überzug bekannt, der in einem Polymer verteiltes Silber enthält. Das Polymer kann mit einem hydrophileren zweiten Polymer verbunden sein.

Die WO 2011/129982 A2 offenbart ein antimikrobielles Beschichtungsmittel, das ein polymeres Trägermaterial umfasst, welches beispielsweise Silber enthält. Zur Hydrophilierung kann das Beschichtungsmittel zusätzlich ein Benetzungsmittel umfassen.

Aufgabe der vorliegenden Erfindung ist es, ein Verbundmaterial der eingangs genannten Art zu schaffen, welches eine verbesserte antimikrobielle Wirksamkeit besitzt. Eine weitere Aufgabe der vorliegenden Erfindung ist es, ein Verfahren zum Herstellen eines derartigen Verbundmaterials zu schaffen.

Die Aufgaben werden erfindungsgemäß durch ein Verbundmaterial mit den Merkmalen des Patentanspruchs 1 sowie durch ein Verfahren gemäß Patentanspruch 12 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verbundmaterials als vorteilhafte Ausgestaltungen des Verfahrens und umgekehrt anzusehen sind.

Ein Verbundmaterial, welches eine verbesserte antimikrobielle Wirksamkeit besitzt, ist erfindungsgemäß dadurch geschaffen, dass das Verbundmaterial wenigstens ein Hydrophilierungsmittel umfasst, welches die Benetzbarkeit der Oberfläche des Verbundmaterials mit Wasser im Vergleich zur Benetzbarkeit der Oberfläche des Verbundmaterials ohne Zusatz des Hydrophilierungsmittels steigert. Weiterhin ist vorgesehen, dass das Verbundmaterial wenigstens einen Schwefelfänger umfasst, wobei der Massenanteil des Schwefelfängers bezogen auf die Gesamtmasse des Verbundmaterials zwischen 0,01 % und 0,5 % beträgt und der Schwefelfänger eine Calcium-, Zink-, Mangan-, Blei- und/oder Eisenverbindung umfasst. Bei aus dem Stand der Technik bekannten antimikrobiellen Verbundmaterialien ergeben sich Probleme beispielsweise dadurch, dass Silber von Schwefel bzw. schwefelhaltigen Additiven in Trägermaterialien aus Kunststoff gebunden und inaktiviert werden kann. Dieser Wirksamkeitsverlust wird beim erfindungsgemäßen Verbundmaterial mit Hilfe des Schwefelfängers zuverlässig verhindert. Beispielsweise können ZnCl₂ oder andere Salze aus Eisen oder Mangan als Schwefelfänger verwendet werden, damit Metallfänger im Trägermaterial und/oder Hydrophilierungsmittel deaktiviert bzw. gesättigt werden und die entstandenen schwerlöslichen Metallsulfide den vorhandenen Schwefel inaktivieren. Unter einem Massenverhältnis zwischen 0,01 % und 0,5 % sind insbesondere Massenanteile von 0,01 %, 0,03 %, 0,05 %, 0,07 %, 0,09 %, 0,11 %, 0,13 %, 0,15 %, 0,17 %, 0,19 %, 0,21 %, 0,23 %, 0,25 %, 0,27 %, 0,29 %, 0,31 %, 0,33 %, 0,35 %, 0,37 %, 0,39 %, 0,41 %, 0,43 %, 0,45 %, 0,47 %, 0,49 % und 0,5 % sowie entsprechende Zwischenwerte bezogen auf die Gesamtmasse des Verbundmaterials zu verstehen. Es hat sich herausgestellt, dass die antimikrobielle Wirksamkeit vorteilhaft gesteigert werden kann, indem das Verbundmaterial nicht möglichst hydrophob, sondern im Gegenteil durch Zugabe eines Hydrophilierungsmittel hydrophil ausgebildet ist. Dabei kann grundsätzlich sogar vorgesehen sein, dass das Verbundmaterial zumindest im Bereich seiner Oberfläche gegebenenfalls leicht hygroskopisch ist. Unter hygroskopisch ist zu verstehen, dass das Verbundmaterial zumindest an seiner Oberfläche bzw. in den oberflächennahen Bereichen Feuchtigkeit aufnimmt. Beispielsweise sollte das Verbundmaterial in Umgebungen mit 10% relativer Luftfeuchtigkeit zwischen 0,01 bis 10 Gew.-% Feuchtigkeit aufnehmen. Unter Werten von 0,01 bis 10 Gew.-% sind insbesondere Werte von 0,01 %, 0,1 %, 0,2 %, 0,3 %, 0,4 %, 0,5 %, 0,6 %, 0,7 %, 0,8 %, 0,9 %, 1,0 %, 1,5 %, 2,0 %, 2,5 %, 3,0 %, 3,5 %, 4,0 %, 4,5 %, 5,0 %, 5,5 %, 6,0 %, 6,5 %, 7,0 %, 7,5 %, 8,0 %, 8,5 %, 9,0 %, 9,5 %, 10,0 % sowie entsprechende Zwischenwerte zu verstehen. Besonders vorteilhaft sind 0,1 bis 3% Gleichgewichtsfeuchtigkeit, die sich in der Regel nach einigen Minuten bis Stunden einstellen. Die Zugabe des Hydrophilierungsmittels setzt die Oberflächenspannung des Verbundmaterials herab und erzeugt somit eine hydrophilere bzw. hygroskopischere Oberfläche des Verbundmaterials. Die Erfindung beruht dabei auch auf der Erkenntnis, dass eine verringerte antimikrobielle Wirksamkeit besonders in hydrophoben Verbundmaterialien auftritt, da diese apolaren Verbundmaterialien keine oder nur sehr wenig Feuchtigkeit an ihrer Oberfläche enthalten bzw. binden können. Demgegenüber ermöglicht das erfindungsgemäße Verbundmaterial eine verbesserte Benetzung der Oberfläche des Verbundmaterials mit Wasser bzw. wässrigen Medien, so dass sich in Abhängigkeit des jeweiligen Agens mehr antimikrobiell wirksame Metalle, Metallionen und/oder Metallverbindungen bilden können bzw. freigesetzt werden können. Indem das erfindungsgemäße Verbundmaterial neben dem antimikrobiell wirksamen Agens ein oder mehrere Hydrophilierungsmittel umfasst, kann somit einerseits die antimikrobielle Wirksamkeit des Agens verstärkt und andererseits die Menge des eingesetzten Agens um bis zu 95% bei gleicher oder besserer antimikrobieller Wirksamkeit gesenkt werden. Hierdurch ergeben sich erhebliche Kosteneinsparungen sowie verschiedene weitere Vorteile, da die Menge der im Verbundmaterial enthaltenen bzw. vom Verbundmaterial freigesetzten Metalle bzw. Metallverbindungen ohne Wirkungsverlust vorteilhaft gesenkt werden kann. Obwohl grundsätzlich eine kovalente Anbindung des Hydrophilierungsmittels and das Trägermittel denkbar ist, liegt bzw. liegen das oder die Hydrophilierungsmittel bevorzugt nicht kovalent gebunden im Verbundmaterial vor, sondern ist bzw. sind mit dem Trägermittel vermischt. Die Mischung aus Trägermittel und Hydrophilierungsmittel kann dabei grundsätzlich homogen bzw. einphasig oder heterogen bzw. mehrphasig sein. Das erfindungsgemäße Verbundmaterial eignet sich auch für verschiedene Einsatzzwecke, für welche die aus dem Stand der Technik bekannten Verbundmaterialien bislang nicht verwendet werden konnten.

In einer vorteilhaften Ausgestaltung der Erfindung ist vorgesehen, dass das Massenverhältnis des Hydrophilierungsmittels bezogen auf die Gesamtmasse des Verbundmaterials zwischen 0,1 % und 22 % beträgt und/oder derart gewählt ist, dass ein Wassertropfen auf der Oberfläche des Verbundmaterials einen Kontaktwinkel kleiner 90°, insbesondere zwischen 70° und 30° aufweist. Prozentangaben sind im Rahmen der vorliegenden Erfindung grundsätzlich als Massenprozentangaben zu verstehen, sofern nichts anderes angegeben ist. Unter einem das Massenverhältnis des Hydrophilierungsmittels zwischen 0,1 % und 22 % sind dabei insbesondere Massenanteile von 0,1 %, 0,5 %, 1,0 %, 1,5 %, 2,0 %, 2,5 %, 3,0 %, 3,5 %, 4,0 %, 4,5 %, 5,0 %, 5,5 %, 6,0 %, 6,5 %, 7,0 %, 7,5 %, 8,0 %, 8,5 %, 9,0 %, 9,5 %, 10,0 %, 10,5 %, 11,0 %, 11,5 %, 12,0 %, 12,5 %, 13,0 %, 13,5 %, 14,0 %, 14,5 %, 15,0 %, 15,5 %, 16,0 %, 16,5 %, 17,0 %, 17,5 %, 18,0 %, 18,5 %, 19,0 %, 19,5 %, 20,0 %, 20,5 %, 21,0 %, 21,5 % oder 22,0 % sowie entsprechende Zwischenwerte wie beispielsweise 0,1 %, 0,2 %, 0,3 %, 0,4 %, 0,5 %, 0,6 %, 0,7 %, 0,8 %, 0,9 %, 1,0 % usw. bezogen auf die Gesamtmasse des Verbundmaterials zu verstehen. Unter dem Kontaktwinkel (auch Randwinkel oder Benetzungswinkel) wird im Rahmen der Erfindung der Winkel bezeichnet, den ein Wassertropfen auf der Oberfläche des Verbundmaterials zu dieser Oberfläche bildet. Hierdurch ist in Abhängigkeit des jeweils verwendeten Hydrophilierungsmittels bzw. des jeweils verwendeten Gemischs von zwei oder mehr Hydrophilierungsmitteln eine besonders gute antimikrobielle Wirksamkeit gewährleistet, ohne dass die sonstigen mechanischen und chemischen Eigenschaften des Verbundmaterials nennenswert beeinträchtigt werden. Der Kontaktwinkel ist dabei ein Maß für die Hydrophobie bzw. die Hydrophilie der Oberfläche des Verbundmaterials. Je geringer der Kontaktwinkel ist, desto ist hydrophiler ist die Oberfläche des Verbundmaterials. Verbundmaterialien, welche einen solchen Massenanteil an Hydrophilierungsmittel aufweisen, dass ihre Oberfläche einen Kontaktwinkel <90° und insbesondere einen Kontaktwinkel zwischen 70° und 30° aufweisen, haben sich dabei im Rahmen der vorliegenden Erfindung als besonders vorteilhaft gezeigt. Unter einem Kontaktwinkel unter 90° sind dabei insbesondere Kontaktwinkel von 89°, 88°, 87°, 86°, 85°, 84°, 83°, 82°, 81°, 80°, 79°, 78°, 77°, 76°, 75°, 74°, 73°, 72°, 71°, 70°, 69°, 68°, 67°, 66°, 65°, 64°, 63°, 62°, 61°, 60°, 59°, 58°, 57°, 56°, 55°, 54°, 53°, 52°, 51°, 50°, 49°, 48°, 47°, 46°, 45°, 44°, 43°, 42°, 41°, 40°, 39°, 38°, 37°, 36°, 35°, 34°, 33°, 32°, 31°, 30°, 29°, 28°, 27°, 26°, 25°, 24°, 23°, 22°, 21°, 20°, 19°, 18°, 17°, 16°, 15°, 14°, 13°, 12°, 11°, 10°, 9°, 8°, 7°, 6°, 5°, 4°, 3°, 2° oder 1°, sowie entsprechende Zwischenwerte zu verstehen. Alternativ oder zusätzlich hat es sich als vorteilhaft gezeigt, wenn der Massenanteil des Hydrophilierungsmittels bezogen auf die Gesamtmasse des Verbundmaterials derart gewählt ist, dass der Kontaktwinkel im Vergleich zum Kontaktwinkel ohne Zusatz des Hydrophilierungsmittels um mindestens 10° kleiner ist. Hierdurch wird grundsätzlich eine signifikante Steigerung der antimikrobiellen Wirksamkeit des Verbundmaterials erreicht.

Indem das Trägermaterial ausgewählt ist aus einer Gruppe, die organische Polymere, Silikone, Gläser, Keramiken, Wachse, Harze, Farben, Lacke, Textilien, Gewebe und/oder Holz umfasst, kann das erfindungsgemäße Verbundmaterial besonders variabel ausgestaltet und für unterschiedlichste Anwendungszwecke verwendet werden. Als keramisches Trägermaterial sind im besonderen Aluminiumoxid, Titanoxid, Siliziumoxid, Siliziumkarbid und Zirkonoxid geeignet. Um auf die üblichen Herstellmethoden und Bedingungen für Keramik zurückgreifen zu können, eignen sich antimikrobielle Agenzien, die in der höchsten Oxidationsstufe vorliegen, wie beispielsweise MoO₃ und WO₃. Daneben können noch metallisches Mo und/oder W als antimikrobielles Agens vorliegen. Damit ergeben sich als mögliche Keramikverbundwerkstoffe beispielsweise folgende Materialkombinationen: Al₂O₃-MoO₃, Al₂O₃-WO₃, ZrO₂-MoO₃, ZrO₂-WO₃, Al₂O₃-Mo-MoO₃, Al₂O₃-W-WO₃, ZrO₂-Mo-MoO₃, ZrO₂-W-WO₃, TiO₂-MoO₃, TiO₂-WO₃, TiO₂-Mo-MoO₃, TiO₂-W-WO₃, SiO₂-MoO₃, SiO₂-WO₃, SiO₂-Mo-MoO₃ und SiO₂-W-WO₃

Es kann vorgesehen sein, dass das Trägermaterial ein hydrophobes Polymer, insbesondere ein Polymer aus der Gruppe der Silikone, Polyolefine, Polyurethane (PU, TPU), Polypropylene (PP), Polyethylene (PE), Polyethylenterephthalate (PET), Polyvinylchloride (PVC), Polystyrole (PS), Polycarbonate (PC), Poly(meth)acrylate (z. B. PAA, PAN, PMA, PBA, ANBA, ANMA, PMMA, AMMA, MABS und/oder MBS) und/oder Acrylnitril-Butadien-Styrole (ABS) umfasst. Auf diese Weise kann die hohe antimikrobielle Wirksamkeit des erfindungsgemäßen Verbundmaterials vorteilhaft auch mit normalerweise wenig geeigneten oder sogar ungeeigneten hydrophoben Trägermaterialien verwirklicht werden. Einen etwas geringeren Effekt als syntaktisches Polypropylen zeigt ataktisches Polypropylen, weil kristalline Strukturen generell weniger Feuchtigkeit aufnehmen können. Ataktisches PP kann mit 0,1 bis 10% zugemischt werden, um eine gute Hydrophilierung und damit verstärkte antimikrobielle Wirksamkeit zu erzielen.

Eine breite antimikrobielle Wirksamkeit ist in weiterer Ausgestaltung der Erfindung dadurch verwirklicht, dass das antimikrobiell wirksame Agens ein Metall, eine Metallverbindung und/oder eine Metalllegierung aus der oligodynamischen Reihe umfasst und/oder dass das Hydrophilierungsmittel ein organisches Hydrophilierungsmittel, insbesondere eine ionische und/oder nicht-ionische grenzflächenaktive organische Verbindung umfasst. Insbesondere kann das Agens aus Silber, Quecksilber, Kupfer, Cadmium, Chrom, Blei, Cobalt, Gold, Zink, Eisen, Mangan, Molybdän, Zinn, Messing und/oder Bronze bestehen. Alternativ kann das Agens zwei oder mehr Metalle, Metallverbindungen und/oder Metalllegierung aus der oligodynamischen Reihe umfassen. Hierdurch kann die antimikrobielle Wirksamkeit besonders flexibel an seinen jeweiligen Anwendungszweck des erfindungsgemäßen Verbundmaterials angepasst werden. Umgekehrt kann grundsätzlich auch vorgesehen sein, dass das Verbundmaterial frei von einem oder mehreren aus der Gruppe Silber, Quecksilber, Kupfer, Cadmium, Chrom, Blei, Cobalt, Gold, Zink, Eisen, Mangan, Molybdän, Zinn, Messing und Bronze bzw. deren Verbindungen ausgebildet ist. Alternativ oder zusätzlich hat es sich als vorteilhaft gezeigt, wenn das Hydrophilierungsmittel ein organisches Hydrophilierungsmittel, insbesondere eine ionische und/oder nicht-ionische grenzflächenaktive organische Verbindung umfasst bzw. ist. Organische Hydrophilierungsmittel sind in großer Vielfalt erhältlich, so dass die antimikrobielle Wirksamkeit des Verbundmaterials optimal an den jeweiligen Einsatzzweck angepasst werden kann. Die Verwendung von grenzflächenaktiven organischen Verbindungen bietet den besonderen Vorteil, dass diese die Grenzflächenspannung zwischen Wasser bzw. dem wässrigen Medium und dem Verbundmaterial besonders stark herabsetzen und damit zu einer besonders guten Wirksamkeit des antimikrobiellen Agens beitragen.

Weitere Vorteile ergeben sich, wenn das antimikrobiell wirksame Agens ein Übergangsmetalloxid, insbesondere MoO₃ und/oder WO₃, umfasst und/oder aus einem Übergangsmetalloxid, insbesondere aus MoO₃ und/oder WO₃, erhältlich ist und/oder dass das das antimikrobiell wirksame Agens ausgewählt ist aus einer Gruppe, die Molybdän, Molybdänverbindungen, Wolfram und Wolframverbindungen umfasst. Hierdurch kann das Übergangsmetalloxid vorteilhaft dazu benutzt werden, eine saure Oberfläche, die bei Kontakt mit Wasser biozid wirkt, bereitzustellen. Auch bei der Verwendung derartiger Metallverbindungen hat es sich gezeigt, dass eine hydrophilere Oberfläche des Verbundmaterials eine signifikante Steigerung der antimikrobiellen Wirksamkeit ermöglicht. Die Übergangsmetalloxide stellen dabei Vorstufen für weitere antimikrobiell wirksame Verbindungen, die sich bei Kontakt mit Wasser in situ aus diesen Übergangsmetalloxiden bilden, dar. Beispielsweise bilden sich aus MoO₃ und WO₃ komplexe Metallsäuregemische, die aufgrund ihrer geringen Wasserlöslichkeit für eine besonders lang anhaltende antimikrobielle Wirkung des Verbundmaterials auch bei ständigem Kontakt mit wässrigen Medien sorgen. Alternativ oder zusätzlich zu Übergangsmetalloxiden kann das antimikrobiell wirksame Agens aus einer Gruppe ausgewählt sein, die Molybdän, Molybdänverbindungen, Wolfram und Wolframverbindungen umfasst. Beispielsweise können Verbindungen wie MoO₂, Wolfram-Blauoxid, Molybdänlegierungen, Wolframlegierung, Molybdänkarbid, Molybdännitrid, Molybdänsilizid, Molybdänsulfid, Wolframkarbid, Wolframnitrid, Wolframsilizid und Wolframsulfid vorgesehen sein. Dabei hat es sich weiterhin als grundsätzlich vorteilhaft gezeigt, wenn Molybdän, die Molybdänverbindungen, Wolfram und/oder die Wolframverbindungen zumindest teilweise oberflächlich oxidiert sind.

In einer weiteren vorteilhaften Ausgestaltung der Erfindung ist vorgesehen, dass das antimikrobiell wirksame Agens und/oder das Hydrophilierungsmittel bei Kontakt mit einem wässrigen Medium als Protonendonator fungiert. Auf diese Weise kann das Verbundmaterial mit einer Art "Säureschutzmantel" versehen werden, wodurch eine besonders hohe antimikrobielle Wirksamkeit gegeben ist.

In einer weiteren vorteilhaften Ausgestaltung der Erfindung ist vorgesehen, dass das Hydrophilierungsmittel ausgewählt ist aus einer Gruppe, die migrierende Additive, insbesondere Glyzerinmonostearat, Alginate, Kollagen, Chitosan, Gelatine, Polyethylenglykol (PEG), Polyethylenglykolester, Polypropylenglykol (PPG), Polypropylenglykolester, Polycarboxylate, Polyacrylsäuren, Polysaccaride, insbesondere Stärke und/oder thermoplastische Stärke, Polymilchsäure (PLA), Humussäuren, Lignin, Maleinsäure, Erucasäure, Ölsäure, Stearate, Kiegelgel, insbesondere fumed silica und/oder Zeolithe, Melasse, Polydextrose, Metallhydroxide, insbesondere Al(OH)₃ und/oder Mg(OH)₂, Aluminiumoxid, insbesondere fused alumina, Copolymere mit Acrylsäure, insbesondere Copolymerisate aus Polystyrol und Acrylsäure, Säureanhydride, insbesondere P₄O₁₀, und Glykosaminoglykane, insbesondere Heparin umfasst. Ebenso haben sich Alkylaminalkoholate, DMMB (Dimethylmethylenblau) sowie weitere Methylenblau-Derivate als vorteilhaft herausgestellt, um das Verbundmaterial zu hydrophilieren. Die Auswahl des oder der Hydrophilierungsmittel richtet sich nach der geplanten Verwendung des Verbundmaterials, welches antimikrobiell ausgestattet werden soll, sowie nach dem jeweils verwendeten Trägermaterial bzw. Trägermaterialgemisch. Neben der Hydrophilierung des Verbundmaterials besitzen die einzelnen Verbindungen verschiedene zusätzliche Vorteile. Da es für eine verbesserte antimikrobielle Wirkung grundsätzlich ausreichend ist, wenn zumindest im Wesentlichen nur die Oberfläche des Verbundmaterials hydrophiler gemacht wird, eignen sich migrierende Hydrophilierungsmittel, die an die Oberfläche des Verbundmaterials wandern und ihre hydrophilen Gruppen an oder im Bereich der Oberfläche des Verbundmaterials exprimieren. Glyzerinmonostearat (GMS) bietet den zusätzlichen Vorteil, dass es als Antistatikum fungiert. Alginate, Kollagen, Chitosan und Gelatine sowie andere hydrophile Polymer können - wo gewünscht - vorteilhaft zur Quellung des Verbundmaterials verwendet werden. Entsprechendes gilt für PEG (Polyethylenglykol) und PPG (Polypropylenglykol) sowie für deren Ester, wobei sich PEG 400 generell als besonders vorteilhaft gezeigt hat. Unter den Polyacrylsäuren haben sich Carbomere wie das kommerziell erhältliche Carbopol 960 als besonders vorteilhaft gezeigt. Andere kommerziell erhältliche Stoffe sind auch als Hydrophilierungsmittel geeignet. Besonders vorteilhaft waren diese: BYK 375, ein silikonhaltiges Oberflächenadditiv der Firma BYK Additives & Instruments, Marlon ARL der Firma Sasol Olefins and Surfactants GmbH, verschiedene Ester, die unter dem Handelsnamen Crodamol von der Firma Croda Cehmicals bezogen werden können, und Polyoxyethylenoleyletherphosphate, die unter den Handelsnamen Lubrhophos und Rhodafac von der Firma Rhodia erhältlich sind. Polysaccaride wie Stärke bzw. thermoplastische Stärke eignen sich ebenfalls für viele Anwendungen und sorgen für einen zusätzlichen Stützeffekt des Verbundmaterials. Da Polysaccharide jedoch den Mikroorganismen auch als Nahrung dienen können, sind bei Polysacchariden in der Regel nur 0,5 bis 5% (Gewicht) als Hydrophilierungsmittel sinnvoll. Stearate und kommerziell erhältliche Adhäsionsmittel dienen gleichzeitig als Antistatik-Additive. Zeolithe, Kiegelgel bzw. Silikate wie fumed silica und Aluminate wie fumed alumina und können bezogen auf ihre Masse besonders große Wassermengen aufnehmen bzw. binden. Von den kommerziell erhältlichen Silikaten hat sich beispielsweise das Produkt "Cab-O-sil TS720" (Cabot Corporation) als besonders vorteilhaft gezeigt. Als kostengünstiges Hydrophilierungsmittel kann auch Melasse verwendet werden, sofern der dunkle Farbton für die gewünschten Anwendungen tolerierbar ist. Metallhydroxide wie Al(OH)₃ oder Mg(OH)₂ bieten sich ebenfalls zur hydrophilen Ausstattung des Verbundmaterials sowie als Flammschutzmittel an, wobei es sich als vorteilhaft gezeigt hat, wenn diese Hydroxide dem Verbundmaterial in Massenanteilen bis zu 20% oder mehr zugegeben werden. Weitere vorteilhafte Hydrophilierungsmittel umfassen Copolymere mit Acrylsäure, wobei Copolymerisate aus Polystyrol (PS) und Acrylsäure mit 10-90 Gew.-% Acrylsäure sich als besonders vorteilhaft gezeigt haben. Die Verwendung von Säureanhydriden wie Phosphorpentoxid (P₄O₁₀) bietet den zusätzlich Vorteil, dass diese einerseits stark hygroskopisch sind und andererseits eine saure und damit stark bakterizid wirksame Oberfläche erzeugen können. Typischerweise genügen daher für Anhydride Massenanteile von 0,5 % bezogen auf die Gesamtmasse des Verbundmaterials. Die Verwendung von Glykosaminoglykanen bietet den Vorteil, dass das Verbundmaterial zusätzlich mit Eigenschaften ausgestattet werden kann, die für verschiedene medizinische Anwendungen von besonderer Wichtigkeit sind. Beispielsweise kann Heparin zur Bereitstellung gerinnungshemmender Eigenschaften verwendet werden, während Hyaluronsäure viskoelastische Eigenschaften besitzt.

Weitere Vorteile ergeben sich, indem das antimikrobiell wirksame Agens und/oder das Hydrophilierungsmittel als Partikel mit einem mittleren Durchmesser zwischen 0,1 µm und 200 µm, insbesondere zwischen 1 µm und 10 µm, vorliegen. Eine derartige partikuläre Form hat sich als vorteilhaft gezeigt, um auf einfache Weise eine möglichst gleichmäßige Verteilung des Agens und/oder des Hydrophilierungsmittels in der Matrix des Trägermaterials zu ermöglichen, insbesondere dann, wenn das Agens und/oder das Hydrophilierungsmittel nicht im Trägermaterial löslich sind bzw. nicht flüssig oder verflüssigbar sind. Darüber hinaus werden hierdurch eine besonders große Oberfläche des Agens und/oder des Hydrophilierungsmittels und eine entsprechend hohe Wirksamkeit erzielt. Unter einem mittleren Durchmesser zwischen 0,1 µm und 200 µm sind insbesondere Durchmesser von 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, 61 µm, 62 µm, 63 µm, 64 µm, 65 µm, 66 µm, 67 µm, 68 µm, 69 µm, 70 µm, 71 µm, 72 µm, 73 µm, 74 µm, 75 µm, 76 µm, 77 µm, 78 µm, 79 µm, 80 µm, 81 µm, 82 µm, 83 µm, 84 µm, 85 µm, 86 µm, 87 µm, 88 µm, 89 µm, 90 µm, 91 µm, 92 µm, 93 µm, 94 µm, 95 µm, 96 µm, 97 µm, 98 µm, 99 µm, 100 µm, 101 µm, 102 µm, 103 µm, 104 µm, 105 µm, 106 µm, 107 µm, 108 µm, 109 µm, 110 µm, 111 µm, 112 µm, 113 µm, 114 µm, 115 µm, 116 µm, 117 µm, 118 µm, 119 µm, 120 µm, 121 µm, 122 µm, 123 µm, 124 µm, 125 µm, 126 µm, 127 µm, 128 µm, 129 µm, 130 µm, 131 µm, 132 µm, 133 µm, 134 µm, 135 µm, 136 µm, 137 µm, 138 µm, 139 µm, 140 µm, 141 µm, 142 µm, 143 µm, 144 µm, 145 µm, 146 µm, 147 µm, 148 µm, 149 µm, 150 µm, 151 µm, 152 µm, 153 µm, 154 µm, 155 µm, 156 µm, 157 µm, 158 µm, 159 µm, 160 µm, 161 µm, 162 µm, 163 µm, 164 µm, 165 µm, 166 µm, 167 µm, 168 µm, 169 µm, 170 µm, 171 µm, 172 µm, 173 µm, 174 µm, 175 µm, 176 µm, 177 µm, 178 µm, 179 µm, 180 µm, 181 µm, 182 µm, 183 µm, 184 µm, 185 µm, 186 µm, 187 µm, 188 µm, 189 µm, 190 µm, 191 µm, 192 µm, 193 µm, 194 µm, 195 µm, 196 µm, 197 µm, 198 µm, 199 µm, 200 µm sowie entsprechende Zwischenwerte wie beispielsweise 0,10 µm, 0,11 µm, 0,12 µm, 0,13 µm, 0,14 µm, 0,15 µm, 0,16 µm, 0,17 µm, 0,18 µm, 0,19 µm, 0,20 µm, 0,21 µm, 0,22 µm, 0,23 µm, 0,24 µm, 0,25 µm, 0,26 µm, 0,27 µm, 0,28 µm, 0,29 µm, 0,30 µm, 0,31 µm, 0,32 µm, 0,33 µm, 0,34 µm, 0,35 µm, 0,36 µm, 0,37 µm, 0,38 µm, 0,39 µm, 0,40 µm, 0,41 µm, 0,42 µm, 0,43 µm, 0,44 µm, 0,45 µm, 0,46 µm, 0,47 µm, 0,48 µm, 0,49 µm, 0,50 µm, 0,51 µm, 0,52 µm, 0,53 µm, 0,54 µm, 0,55 µm, 0,56 µm, 0,57 µm, 0,58 µm, 0,59 µm, 0,60 µm, 0,61 µm, 0,62 µm, 0,63 µm, 0,64 µm, 0,65 µm, 0,66 µm, 0,67 µm, 0,68 µm, 0,69 µm, 0,70 µm, 0,71 µm, 0,72 µm, 0,73 µm, 0,74 µm, 0,75 µm, 0,76 µm, 0,77 µm, 0,78 µm, 0,79 µm, 0,80 µm, 0,81 µm, 0,82 µm, 0,83 µm, 0,84 µm, 0,85 µm, 0,86 µm, 0,87 µm, 0,88 µm, 0,89 µm, 0,90 µm, 0,91 µm, 0,92 µm, 0,93 µm, 0,94 µm, 0,95 µm, 0,96 µm, 0,97 µm, 0,98 µm, 0,99 µm, 1,00 µm usw. zu verstehen.

Es kann vorgesehen sein, dass das Hydrophilierungsmittel unter SATP-Bedingungen und bei einem pH-Wert von 7 eine Wasserlöslichkeit von höchstens 10 g/l besitzt. Unter SATP-Bedingungen ("Standard Ambient Temperature and Pressure") sind dabei die Temperatur T = 298,15 K entsprechend 25 °C und der Druck p = 101.300 Pa (1013 hPa, 101,3 kPa, 1,013 bar) zu verstehen. Indem das Hydrophilierungsmittel schlecht wasserlöslich ist, werden ein schnelles Auswaschen sowie eine damit einhergehende Verschlechterung der antimikrobiellen Eigenschaften zuverlässig verhindert. Beispielsweise kann das Hydrophilierungsmittel eine Wasserlöslichkeit von 10,0 g/l, 9,9 g/l, 9,8 g/l, 9,7 g/l, 9,6 g/l, 9,5 g/l, 9,4 g/l, 9,3 g/l, 9,2 g/l, 9,1 g/l, 9,0 g/l, 8,9 g/l, 8,8 g/l, 8,7 g/l, 8,6 g/l, 8,5 g/l, 8,4 g/l, 8,3 g/l, 8,2 g/l, 8,1 g/l, 8,0 g/l, 7,9 g/l, 7,8 g/l, 7,7 g/l, 7,6 g/l, 7,5 g/l, 7,4 g/l, 7,3 g/l, 7,2 g/l, 7,1 g/l, 7,0 g/l, 6,9 g/l, 6,8 g/l, 6,7 g/l, 6,6 g/l, 6,5 g/l, 6,4 g/l, 6,3 g/l, 6,2 g/l, 6,1 g/l, 6,0 g/l, 5,9 g/l, 5,8 g/l, 5,7 g/l, 5,6 g/l, 5,5 g/l, 5,4 g/l, 5,3 g/l, 5,2 g/l, 5,1 g/l, 5,0 g/l, 4,9 g/l, 4,8 g/l, 4,7 g/l, 4,6 g/l, 4,5 g/l, 4,4 g/l, 4,3 g/l, 4,2 g/l, 4,1 g/l, 4,0 g/l, 3,9 g/l, 3,8 g/l, 3,7 g/l, 3,6 g/l, 3,5 g/l, 3,4 g/l, 3,3 g/l, 3,2 g/l, 3,1 g/l, 3,0 g/l, 2,9 g/l, 2,8 g/l, 2,7 g/l, 2,6 g/l, 2,5 g/l, 2,4 g/l, 2,3 g/l, 2,2 g/l, 2,1 g/l, 2,0 g/l, 1,9 g/l, 1,8 g/l, 1,7 g/l, 1,6 g/l, 1,5 g/l, 1,4 g/l, 1,3 g/l, 1,2 g/l, 1,1 g/l, 1,0 g/l, 0,9 g/l, 0,8 g/l, 0,7 g/l, 0,6 g/l, 0,5 g/l, 0,4 g/l, 0,3 g/l, 0,2 g/l, 0,1 g/l oder weniger aufweisen.

In einer weiteren vorteilhaften Ausgestaltung der Erfindung ist vorgesehen, dass das antimikrobiell wirksame Agens und/oder das Hydrophilierungsmittel im Trägermaterial verteilt und/oder als Beschichtung auf dem Trägermaterial aufgebracht ist und/oder zumindest teilweise eine porige Struktur mit einer mittleren Porengröße zwischen 50 µm und 900 µm aufweist. Hierdurch kann das erfindungsgemäße Verbundmaterial besonders gut an unterschiedliche Verwendungszwecke angepasst werden. Insbesondere können die Dauer und Stärke des antimikrobiellen Effekts besonders einfach durch die Verteilung des Agens und/oder des Hydrophilierungsmittel im und/oder auf dem Trägermaterial eingestellt werden. Durch eine offen- und/oder geschlossenporige Struktur wird eine besonders große Oberfläche und damit eine besonders hohe Wirksamkeit erzielt. Die mittlere Porengröße kann beispielsweise 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, 210 µm, 220 µm, 230 µm, 240 µm,250 µm, 260 µm, 270 µm, 280 µm, 290 µm, 300 µm, 310 µm, 320 µm, 330 µm, 340 µm,350 µm, 360 µm, 370 µm, 380 µm, 390 µm, 400 µm, 410 µm, 420 µm, 430 µm, 440 µm, 450 µm, 460 µm, 470 µm, 480 µm, 490 µm, 500 µm, 510 µm, 520 µm, 530 µm, 540 µm, 550 µm, 560 µm, 570 µm, 580 µm, 590 µm, 600 µm, 610 µm, 620 µm, 630 µm, 640 µm, 650 µm, 660 µm, 670 µm, 680 µm, 690 µm, 700 µm, 710 µm, 720 µm, 730 µm, 740 µm, 750 µm, 760 µm, 770 µm, 780 µm, 790 µm, 800 µm, 810 µm, 820 µm, 830 µm, 840 µm,850 µm, 860 µm, 870 µm, 880 µm, 890 µm oder 900 µm betragen oder einem entsprechenden Zwischenwert entsprechen. Eine große Oberfläche kann alternativ oder zusätzlich grundsätzlich auch erzielt werden, indem das antimikrobiell wirksame Agens und/oder das Hydrophilierungsmittel zumindest bereichsweise in Form inselartiger, im Wesentlichen nicht zusammenhängender Agglomerate vorliegt. Besonders vorteilhaft ist es, wenn diese inselartigen Agglomerate die Oberfläche des Verbundmaterials zu 40 bis 90 % bedecken. Die bevorzugte Größe der einzelnen Agglomerate liegt unter 10 µm, bevorzugt unter 5 µm.

In weiterer Ausgestaltung der Erfindung ist das Verbundmaterial als Beschichtungsmittel, insbesondere als Anstrichmittel, Lack und/oder Antifouling-Anstrich, ausgebildet. Unter einem Anstrichmittel werden Ausführungsformen des Verbundmaterials verstanden, die eine flüssige bis pastenförmige Konsistenz besitzen und die auf Oberflächen aufgetragen einen physikalisch oder chemisch trocknenden Anstrich ergeben. Hierdurch können die vorteilhaften Eigenschaften des erfindungsgemäßen Verbundmaterials besonders flexibel für beliebige Gegenstände und Oberflächen verwirklicht werden. Wichtige Ausgestaltungen sind beispielsweise Anti-Fouling Anstriche, z. B. für Schiffe, sowie antimikrobielle Ausstattung im Gesundheitswesen, der Industrie, dem Lebensmittelbereich und dem privaten Sektor.

In einer weiteren vorteilhaften Ausgestaltung der Erfindung ist vorgesehen, dass der Massenanteil des antimikrobiell wirksamen Agens bezogen auf die Gesamtmasse des Verbundmaterials mindestens 0,1 %, vorzugsweise mindestens 1,0 % beträgt. Beispielsweise kann der Massenanteil bzw. das Massenverhältnis 0,1 %, 1 %, 2 %, 3 %, 4 %, 5 %, 6 %, 7 %, 8 %, 9 %, 10 %, 11 %, 12 %, 13 %, 14 %, 15 %, 16 %, 17 %, 18 %, 19 %, 20 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 % oder mehr bezogen auf die Gesamtmasse des Verbundmaterials betragen. Entsprechende Zwischenwerte wie beispielsweise 0,1 %, 0,2 %, 0,3 %, 0,4 %, 0,5 %, 0,6 %, 0,7 %, 0,8 %, 0,9 %, 1,0 % usw. sind natürlich auch in diesem Fall als ausdrücklich mitoffenbart anzusehen.

Ein weiterer Aspekt der Erfindung betrifft ein Verfahren zum Herstellen eines Verbundmaterials, bei welchem ein Trägermaterial mit wenigstens einem antimikrobiell wirksamen Agens aus der Gruppe der Metalle und Metallverbindungen sowie mit wenigstens einem Hydrophilierungsmittel, welches die Benetzbarkeit der Oberfläche des Verbundmaterials mit Wasser im Vergleich zur Benetzbarkeit der Oberfläche des Verbundmaterials ohne Zusatz des Hydrophilierungsmittels steigert, versehen wird. Weiterhin ist vorgesehen, dass zum Herstellen des Verbundmaterials wenigstens ein Schwefelfänger verwendet wird, wobei der Massenanteil des Schwefelfängers bezogen auf die Gesamtmasse des Verbundmaterials zwischen 0,01 % und 0,5 % beträgt und der Schwefelfänger eine Calcium-, Zink-, Mangan-, Blei- und/oder Eisenverbindung umfasst. Bei aus dem Stand der Technik bekannten antimikrobiellen Verbundmaterialien ergeben sich Probleme beispielsweise dadurch, dass Silber von Schwefel bzw. schwefelhaltigen Additiven in Trägermaterialien aus Kunststoff gebunden und inaktiviert werden kann. Dieser Wirksamkeitsverlust wird beim erfindungsgemäßen Verbundmaterial mit Hilfe des Schwefelfängers zuverlässig verhindert. Beispielsweise können ZnCl₂ oder andere Salze aus Eisen oder Mangan als Schwefelfänger verwendet werden, damit Metallfänger im Trägermaterial und/oder Hydrophilierungsmittel deaktiviert bzw. gesättigt werden und die entstandenen schwerlöslichen Metallsulfide den vorhandenen Schwefel inaktivieren. Unter einem Massenverhältnis zwischen 0,01 % und 0,5 % sind insbesondere Massenanteile von 0,01 %, 0,03 %, 0,05 %, 0,07 %, 0,09 %, 0,11 %, 0,13 %, 0,15 %, 0,17 %, 0,19 %, 0,21 %, 0,23 %, 0,25 %, 0,27 %, 0,29 %, 0,31 %, 0,33 %, 0,35 %, 0,37 %, 0,39 %, 0,41 %, 0,43 %, 0,45 %, 0,47 %, 0,49 % und 0,5 % sowie entsprechende Zwischenwerte bezogen auf die Gesamtmasse des Verbundmaterials zu verstehen. Es hat sich herausgestellt, dass die antimikrobielle Wirksamkeit vorteilhaft gesteigert werden kann, indem das Verbundmaterial nicht möglichst hydrophob, sondern im Gegenteil durch Zugabe eines Hydrophilierungsmittel hydrophil ausgebildet ist. Die Zugabe des Hydrophilierungsmittels setzt die Oberflächenspannung des Verbundmaterials herab und erzeugt somit eine hydrophilere bzw. hygroskopischere Oberfläche des Verbundmaterials. Die Erfindung beruht dabei auf der Erkenntnis, dass eine verringerte antimikrobielle Wirksamkeit besonders in hydrophoben Verbundmaterialien auftritt, da diese apolaren Verbundmaterialien keine oder nur sehr wenig Feuchtigkeit an ihrer Oberfläche enthalten bzw. binden können. Demgegenüber ermöglicht das erfindungsgemäß hergestellte Verbundmaterial eine verbesserte Benetzung der Oberfläche des Verbundmaterials mit Wasser, so dass sich in Abhängigkeit des jeweiligen Agens mehr antimikrobiell wirksame Metalle, Metallionen und/oder Metallverbindungen bilden können bzw. freigesetzt werden können. Indem das erfindungsgemäß hergestellte Verbundmaterial neben dem antimikrobiell wirksamen Agens ein oder mehrere Hydrophilierungsmittel umfasst, kann somit einerseits die antimikrobielle Wirksamkeit des Agens verstärkt und andererseits die Menge des eingesetzten antimikrobiellen Agens um bis zu 95% bei gleicher oder besserer antimikrobieller Wirksamkeit gesenkt werden. Hierdurch ergeben sich erhebliche Kosteneinsparungen sowie verschiedene weitere Vorteile, da die Menge der im Verbundmaterial enthaltenen bzw. vom Verbundmaterial freigesetzten Metalle bzw. Metallverbindungen ohne Wirkungsverlust vorteilhaft gesenkt werden kann.

Das erfindungsgemäß hergestellte Verbundmaterial eignet sich somit auch für verschiedene Einsatzzwecke, für welche die aus dem Stand der Technik bekannten Verbundmaterialien bislang nicht verwendet werden konnten. Weitere sich ergebende Vorteile sind den vorhergehenden Beschreibungen zum erfindungsgemäßen Verbundmaterial zu entnehmen, wobei vorteilhafte Ausgestaltungen des erfindungsgemäßen Verbundmaterials als vorteilhafte Ausgestaltungen des erfindungsgemäßen Verfahrens und umgekehrt anzusehen sind.

In einer vorteilhaften Ausgestaltung der Erfindung ist vorgesehen, dass das Trägermaterial mit dem antimikrobiell wirksamen Agens und/oder mit dem Hydrophilierungsmittel beschichtet wird und/oder dass das antimikrobiell wirksame Agens und/oder das Hydrophilierungsmittel vorzugsweise gleichmäßig im Trägermaterial verteilt wird. Hierdurch kann das erfindungsgemäße Verbundmaterial besonders gut an unterschiedliche Verwendungszwecke angepasst werden. Insbesondere können die Dauer und Stärke des antimikrobiellen Effekts besonders einfach durch die Verteilung des Agens und/oder des Hydrophilierungsmittel im und/oder auf dem Trägermaterial eingestellt werden.

Es kann vorgesehen sein, dass das antimikrobiell wirksame Agens und/oder das Hydrophilierungsmittel vor dem Beschichten und/oder dem Verteilen auf eine Korngröße zwischen 0,1 µm und 200 µm, insbesondere zwischen 1 µm und 10 µm vermahlen wird. Eine derartige partikuläre Form hat sich als vorteilhaft gezeigt, um auf einfache Weise eine möglichst gleichmäßige Verteilung des Agens und/oder des Hydrophilierungsmittels in der Matrix des Trägermaterials zu ermöglichen, insbesondere dann, wenn das Agens und/oder das Hydrophilierungsmittel nicht im Trägermaterial löslich sind bzw. nicht flüssig oder verflüssigbar sind. Darüber hinaus werden hierdurch eine besonders große Oberfläche des Agens und/oder des Hydrophilierungsmittels und eine entsprechend hohe Wirksamkeit erzielt.

Ein dritter Aspekt der Erfindung betrifft die Verwendung eines Verbundmaterials gemäß dem ersten Erfindungsaspekt und/oder eines Verbundmaterials, welches mittels eines Verfahrens gemäß dem zweiten Erfindungsaspekt erhältlich und/oder erhalten ist, zum Herstellen einer Verkleidung für einen Kanal, insbesondere für eine Rohrleitung für Flüssigkeiten, Gase und/oder Schlämme. Bakterien wie beispielsweise Sulfat-bindende Bakterien in Ö1- und Gas-Pipelines stellen ein großes Problem dar, da sie stark zur Korrosion der Pipelines und damit zur Leckbildung beitragen. Ähnliches ist auch bei wasser- und schlammführenden Kanälen und Rohrleitungen wie beispielsweise Wasser- oder Abwasserkanälen zu beobachten. Aber auch von außen werden Rohrleitungen durch Bakterien und andere Mikroorganismen angegriffen, beispielsweise bei in der Erde verlegten Kanälen. Indem das erfindungsgemäße Verbundmaterial zur Herstellung einer Innen- und/oder Außenverkleidung eines Kanals verwendet wird, können die antimikrobiellen Eigenschaften des Verbundmaterials vorteilhaft sowohl zur antimikrobiellen Ausstattung neuer Kanäle als auch zur Reparatur bestehender Kanäle genutzt werden. Die Verkleidung kann dabei grundsätzlich eine oder mehrer Schichten aufweisen, wobei mindestens eine Schicht das Verbundmaterial enthält. Vorzugsweise enthält wenigstens eine außen liegende Schicht der Verkleidung das erfindungsgemäße Verbundmaterial. Weitere Merkmale und deren Vorteile sind den Beschreibungen des ersten und des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts und umgekehrt anzusehen sind.

Ein weiterer Aspekt betrifft eine Verkleidung für einen Kanal, insbesondere für eine Rohrleitung für Flüssigkeiten, Gase und/oder Schlämme, welche ein Schichtsystem mit wenigstens einer Schicht umfasst, wobei zumindest eine Schicht das Verbundmaterial gemäß dem ersten Erfindungsaspekt und/oder das Verbundmaterial, welches mittels eines Verfahrens gemäß dem zweiten Erfindungsaspekt erhältlich und/oder erhalten ist, enthält oder aus diesem besteht. Weitere Merkmale und deren Vorteile sind den Beschreibungen des ersten und des zweiten Erfindungsaspekts zu entnehmen.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische seitliche Schnittansicht eines Verbundmaterials ohne Hydrophilierungsmittel, wobei auf der Oberfläche des Verbundmaterials ein Wassertropfen angeordnet ist;
- Fig. 2: eine schematische seitliche Schnittansicht eines Verbundmaterials mit Hydrophilierungsmittel, wobei auf der Oberfläche des Verbundmaterials ein Wassertropfen angeordnet ist;
- Fig. 3: eine Prinzipdarstellung einer Petrischale, welche in drei Sektoren mit jeweils unterschiedlicher Bakterienbelastung unterteilt ist;
- Fig. 4: eine Fotographie mehrerer Petrischalen aus einer Versuchreihe zur Untersuchung der antimikrobiellen Wirksamkeit von drei unterschiedlichen Verbundmaterialien;
- Fig. 5: eine schematische Schnittansicht einer Verkleidung für einen Kanal, wobei die Verkleidung das erfindungsgemäße Verbundmaterial enthält.

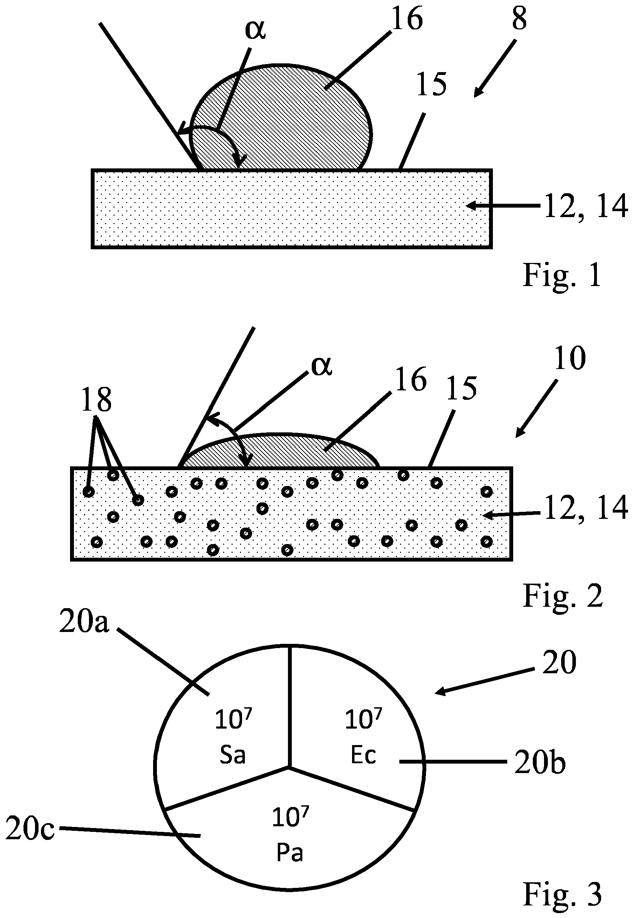

Fig. 1 zeigt eine schematische seitliche Schnittansicht eines aus dem Stand der Technik bekannten Verbundmaterials 8, welches ein hydrophobes Trägermaterial 12 wie beispielsweise Polypropylen umfasst, wobei im Trägermaterial 12 ein mit Punkten symbolisiertes, antimikrobiell wirksames Agens 14 wie beispielsweise Nanosilber gleichmäßig verteilt ist. Auf der Oberfläche 15 des Verbundmaterials 8 ist ein Wassertropfen 16 angeordnet, welcher einen Kontaktwinkel α von etwa 120° aufweist. Man erkennt, dass das herkömmliche Verbundmaterial 8 schlecht benetzbar ist. Der Grund dafür ist, dass hydrophobe Kunststoffe wie Polypropylen, thermoplastisches Urethan (TPU) und dergleichen eine Gleichgewichtsfeuchtigkeit von 0,5 % bis 4 % aufweisen, das heißt maximal etwa 4 % Wasser aus der Luftfeuchtigkeit aufnehmen. Wasser ist jedoch für die Bildung von antimikrobiell wirksamen Metall-Ionen und Metallsäuren aus dem antimikrobiellen Agens 14 wesentlich. Daher besitzt das gezeigte Verbundmaterial 8 eine vergleichsweise geringe antimikrobielle Wirksamkeit.

Fig. 2 zeigt eine schematische seitliche Schnittansicht eines Verbundmaterials 10, welches ebenfalls ein hydrophobes Trägermaterial 12 wie beispielsweise Polypropylen umfasst, wobei im Trägermaterial 12 ein mit Punkten symbolisiertes, antimikrobiell wirksames Agens 14 wie beispielsweise Nanosilber gleichmäßig verteilt ist. Im Unterschied zum in Fig. 1 gezeigten Verbundmaterial 8 weist das Verbundmaterial 10 zusätzlich ein mit Kreisen symbolisiertes Hydrophilierungsmittel 18 wie beispielsweise Polyethylenglycol (PEG 400), Polypropylenglycol-Ester (PPG-Ester), Polymilchsäure (PLA) oder Heparin auf.

Man erkennt, dass die Benetzbarkeit der Oberfläche 15 des Verbundmaterials 10 mit Wasser im Vergleich zur in Fig. 1 gezeigten Benetzbarkeit der Oberfläche 15 des Verbundmaterials 8 ohne Zusatz des Hydrophilierungsmittels 18 deutlich gesteigert ist. Der Wassertropfen 16 weist nunmehr einen Kontaktwinkel α von etwa 65° auf. Eine Messung des Kontaktwinkels α eines Wassertropfens auf der Oberfläche 15 zeigt sehr rasch und einfach, ob eine Verbesserung der antimikrobiellen Wirksamkeit erzielt wird. Generell sollte der Kontaktwinkel α < 90° sein, besser kleiner 70°. In der Regel ist es nicht erforderlich, einen Kontaktwinkel α < 30° zu erreichen. Bis zu 5° und darunter sind jedoch in manchen Systemen nach Zugabe des Hydrophilierungsmittels 18 möglich. Das oder die Hydrophilierungsmittel 18 können dabei grundsätzlich nicht nur in das Trägermaterial 12 eingemischt werden, sondern alternativ oder zusätzlich auch auf diesem als Beschichtung aufgetragen sein. Ebenso kann grundsätzlich vorgesehen sein, dass das antimikrobiell wirksame Agens 14 nicht nur im Trägermaterial 12 eingemischt ist, sondern alternativ oder zusätzlich auf dieses aufgetragen wird. Durch die gleichzeitige Anwendung des Agens 14 und des Hydrophilierungsmittels 18 kann die antimikrobielle Wirksamkeit des Verbundmaterials 10 entweder verstärkt werden, oder die Menge des eingesetzten Agens 14 deutlich, zumindest jedoch um mindestens 10% und um bis zu 95% gesenkt werden, was einen positiven Einfluss auf Umwelt und Kosten hat. Entscheidend für die Benetzbarkeit bzw. den Kontaktwinkel α sind die obersten 1-10 nm der Oberfläche 15. Sie bestimmen den Kontaktwinkel α des Wassertropfens 16 und damit die Hydrophilie der Oberfläche 15. Daher ist es grundsätzlich möglich, migrierende Hydrophilierungsmittel 18 zu verwenden, die aus dem Trägermaterial 12 an die Oberfläche 15 migrieren und beispielsweise OH-Gruppen an der Oberfläche exprimieren. Es hat sich gezeigt, dass in der Regel 0,1 bis 5% (nach Masse bezogen auf die Gesamtformulierung bei Ausstattung des gesamten Verbundmaterials 10) Hydrophilierungsmittel 18 einen guten Effekt zeigen. Die Auswahl des Hydrophilierungsmittels 18 bzw. des Gemisches mehrerer Hydrophilierungsmittel 18 richtet sich insbesondere nach der Anwendung und dem Trägermaterial 12, welches antimikrobiell ausgestattet werden soll. Folgende Stoffe und deren Derivate haben sich als vorteilhaft erwiesen:
- GMS (Glyzerinmonostearat), welches als Antistatikum eingesetzt wird;
- Alginate, Kollagen, Chitosan und Gelatine sowie andere Stoffe, die für Quellung in Polymeren und anderen Werkstoffen sorgen;
- PEG (Polyethylenglykol) und PPG (Polypropylenglykol) sowie deren Ester (PEG 400 ist besonders vorteilhaft);
- Polycarboxylate;
- Alkylaminalkoholate (Alkylamin-Ethoxylat ist besonders vorteilhaft);
- Polyacrylsäuren (Carbomere, Carbopol 960™ ist besonders vorteilhaft);
- Polysaccaride wie Stärke (thermoplastische Stärke ist besonders vorteilhaft. Stärke ist allerdings nicht für alle Anwendungen geeignet, weil es auch ein Nährmedium für Mikroorganismen darstellen kann);
- Polymilchsäure (PLA);
- Humussäuren und Lignin;
- Maleinsäure, Erucasäure, Ölsäure;
- Stearate und kommerziell erhältliche Adhäsionsmittel und Antistatik-Additive;
- Kiegelgel, fumed silica, fumed alumina und Zeolithe, welche Wasser aufnehmen können (Fused silica "TS720" (Cabot) ist besonders vorteilhaft);
- Melasse (aufgrund des Farbtons nicht für alle Anwendungen geeignet);
- Polydextrose;
- Dimethylmethylenblau (DMMB);
- Al(OH)₃, Mg(OH)₂ und andere Hydroxide (bis zu 20% nach Gewicht werden benötigt)
- Copolymere mit (Meth)Acrylsäure. Copolymerisate aus PS und (Meth)Acrylsäure sind besonders vorteilhaft (10-90% (Meth)Acrylsäure);
- Säureanhydride wie P₄O₁₀ (typischerweise reichen hier 0,5% nach Gewicht); oder
- Glykosaminoglykane, z. B. Heparin.

Eine gleichmäßige Verteilung des Hydrophilierungsmittels 18 in der Matrix des Trägermaterials 12 hat sich als vorteilhaft herausgestellt. Falls die Hydrophilierungsmittel 18 und ggf. weiteren Additive im Materialsystem nicht löslich sind bzw. bei der Verarbeitung (Einmischen, Eincompoundieren, Einschneiden, etc.) nicht flüssig sind, sollten sie vorher auf eine Korngröße zwischen 0,1 und 100 µm vermahlen werden. Bevorzugt sind mittlere Korndurchmesser zwischen 1 µm und 10 µm. Das oder die Hydrophilierungsmittel 18 sollten nach Möglichkeit schlecht wasserlöslich sein, da sie ansonsten zu rasch ausgewaschen werden könnten.

Die folgende Tabelle 1 zeigt zwei Ausführungsbeispiele des erfindungsgemäßen Verbundmaterials 10 sowie ein nicht-erfindungsgemäßes Beispiel (Beispiel 3).

**Tabelle 1: Zwei Ausführungsbeispiele des erfindungsgemäßen Verbundmaterials 10**

| Beispiel | 1 | | 2 | | 3 | |
|---|---|---|---|---|---|---|
| Trägermaterial | Polypropylen (PP) | 92,90% | Polypropylen (PP) | 95,90% | Polypropylen (PP) | 95% |
| Antimikrobielles Agens | Ag, als Nanopartikel auf Trägermaterial aufgebracht | 5% | Ag (als Ag-NO₃) in Trägermaterial eingemischt | 2% | WO₃ in Trägermaterial eingemischt und auf Trägermaterial aufgebracht | 2% |
| Hydrophilierungsmittel | PEG 400 | 2% | PPG Ester | 2% | PLA | 3% |
| Inaktivator für störende Additive (Schwefelfänger) | ZnCl₂ | 0,10% | ZnCl₂ | 0,10% | - | |

Wie in den Ausführungsbeispielen 1 und 2 gezeigt, werden speziell silberhaltigen Verbundmaterialien 10 noch weitere Additive im Bereich von 0,01 bis 0,5% (nach Masse) beigemengt. Besonders vorteilhaft sind hierbei ZnCl₂ oder andere Salze aus Eisen oder Mangan, damit die Metallfänger im Kunststoff deaktiviert (gesättigt) werden und entstehende, schwerlösliche Metallsulfide den vorhandenen Schwefel inaktivieren. Durch das Additiv kann die Wirksamkeit des Verbundmaterials 10 beschleunigt, verstärkt und zeitlich ausgedehnt werden. Tabelle 2 zeigt exemplarisch, für welche Hydrophilierungsmittel 18 in Kunststoffen bzw. in Farben und Lacken zusammen mit dem antimikrobiellen Agens 14 besonders gute Ergebnisse erzielt wurden.

**Tabelle 2: Qualitativer Vergleich der Hydrophilierungs- und Hygroskopierungswirkung unterschiedlicher Hydrophilierungsmittel in Kunststoffen (PP, ABS) bzw. Farben und Lacken (Epoxidharz, Acryl-Lack, PU-Lack)**

| Nr. | Hydrophilierungsmittel | Besonders gut in Kunststoffen | Gut in Kunststoffen | Besonders gut in Farben | Gut in Farben |
|---|---|---|---|---|---|
| 1 | PEG | | + | + | |
| 2 | PEG 400 | | + | + | |
| 3 | Ruco-coat AD 7025 | | + | | |
| 4 | Polyquart Ecoclean | | + | | |
| 5 | Tech Mer PPM 15560 | | + | | |
| 6 | BYK 375 | | + | + | |
| 7 | Carbopol EZ-2 | + | | | |
| 8 | Carbopol EZ-4 | | + | | |
| 9 | Carbopol 690 | + | | + | |
| 10 | Marlon ARL | | + | | |
| 11 | Stärke | | | | |
| 12 | Alkylaminethoxylat | + | | + | |
| 13 | GMS | + | | + | |
| 14 | Polydextrose | | | | + |
| 15 | Crodamol AB- LQ-(RB) | | | | + |
| 16 | Crodamol OHS-LQ-(RB) | | | | + |
| 17 | Crodamol OPG-LQ-(RB) | | | | + |
| 18 | Lubrhophos LM 400 E | | | | + |
| 19 | Lubrhophos RD 510 E | | | | + |
| 20 | Rhodafac PA-23 | | | | + |
| 21 | Rhodafac PA32 | | | | + |
| 22 | Strodex NB-20 | | | | + |
| 23 | Dextrol OC-60 | | | | + |
| 24 | Mirapol -S-410 | | | | + |
| 25 | Dimethylmethylenblau | | + | | + |

Das erfindungsgemäße Verbundmaterial 10 kann grundsätzlich bei Raumtemperatur fest oder flüssig ausgebildet sein. Als Trägermaterial 12 können grundsätzlich natürliche und künstliche Polymere verwendet werden. Besonders vorteilhaft ist die Verwendung von apolaren Kunststoffen wie PE, PP, PS, PC, ABS, Silikon, Harzen und/oder Wachsen als Trägermaterial 12. Das Verbundmaterial 10 kann beispielsweise als Farbe oder Lack formuliert sein und ein Lösungs- und/oder Dispergiermittel sowie Farbpigmente oder weitere Inhaltsstoffe umfassen.

Nach dieser Erfindung ist es möglich, sämtliche bekannten Stoffe und Verfahren zur Hydrophilisierung von festen und flüssigen Verbundmaterialien 10 auf Basis von Polymeren, Silikon, Farben, Lacken, Harzen, Wachsen und dergleichen, die zumindest ein antimikrobiell wirksames Agens 14 enthalten, einzusetzen, um dadurch die Benetzbarkeit (Hydrophilie, Hygroskopie) des Verbundmaterials 10 zu steigern und so die antimikrobielle Wirksamkeit zu verbessern. Wichtige Ausführungsformen des Verbundmaterials 10 sind auch Anti-Fouling Anstriche z.B. für Schiffe sowie antimikrobielle Ausstattungen im Gesundheitswesen, der Industrie, dem Lebensmittelbereich und dem privaten Sektor.

Weitere grundsätzliche Einsatzmöglichkeiten des erfindungsgemäßen Verbundmaterials 10 zur antimikrobiellen Ausstattung von Gegenständen umfassen exemplarisch und nichtlimitierend die Verwendung für medizinische Einrichtungen, medizinische Geräte und Verbrauchsgüter, Arztpraxen, Senioren- und Pflegeheime, Industrieanlagen und -Maschinen, Lebensmitteltechnik, Transportsysteme, Verpackungen, Verhinderung der Dieselpest/Fouling, Öffentlicher Verkehr, Warteräume, öffentliche und nicht-öffentliche Toiletten und Bäder, Selbstbedienungsautomaten, Haushaltsgeräte, Elektrogeräte, Küchen- und Sanitäroberflächen, Textilien, Telefone, Computer- und Telefontastaturen, Einstellschrauben, Überwachungs-, Beatmungsgeräte, Infusionspumpen, O₂-, CO₂- etc. Monitore, Schreibgeräte, Cardex, Visitenwagen, Stethoskope, Türkliniken, Wasserarmaturen und Fußböden.

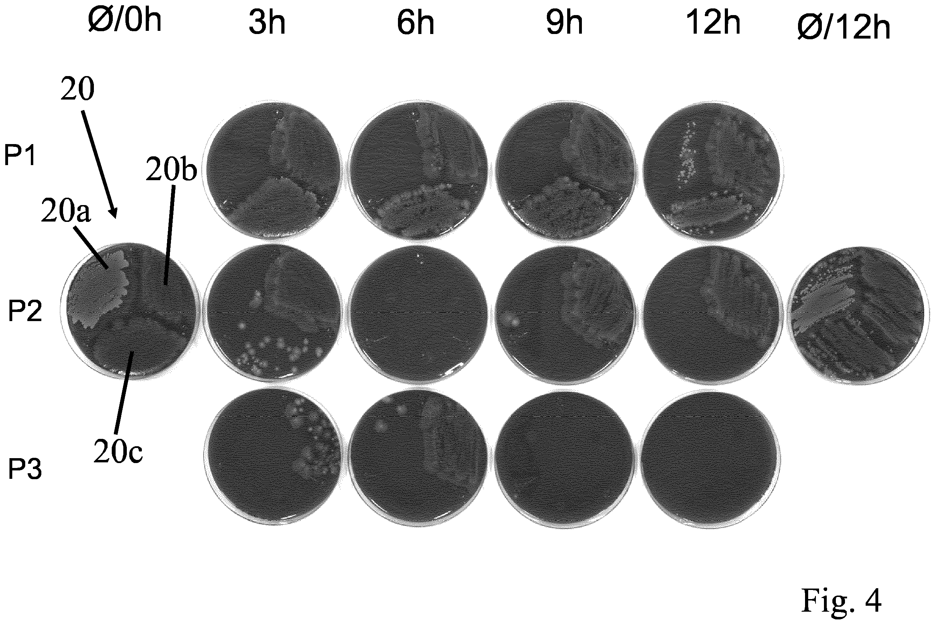

Fig. 3 zeigt eine Prinzipdarstellung einer mit einer Agarplatte versehenen Petrischale 20, welche in drei Sektoren 20a, 20b, 20c mit jeweils unterschiedlicher Bakterienbelastung unterteilt ist. Fig. 3 wird im Folgenden in Zusammenschau mit Fig. 4 erläutert werden, in welcher eine Fotographie mehrerer Petrischalen 20 aus einer Versuchreihe zur Untersuchung der antimikrobiellen Wirksamkeit von drei unterschiedlichen Verbundmaterialien 10 gezeigt ist.

Insbesondere die Methode der Ausrollkultur hat sich zur Untersuchung der antimikrobiellen Wirkung von Verbundmaterialien 10 gut bewährt. Die untersuchten Verbundmaterialien 10 werden hierbei zur Untersuchung ihrer antimikrobiellen Wirksamkeit in entsprechende Keimsuspensionen gegeben. Es kommt zum oberflächlichen Anwachsen von Keimen. Nach 3, 6, 9 und 12 Stunden werden die Proben über eine Agarplatte gerollt und in eine sterile, physiologische Kochsalzlösung gegeben. Nach diesem Abrollvorgang werden die Agarplatten bzw. Petrischalen 20 fotografiert und bezüglich der keimreduzierenden bzw. keimtötenden Wirkung des betreffenden Verbundmaterials 10 beurteilt. Diese wiederholte Abrolltätigkeit in 3-stündigem Abstand gibt Aufschluss, ob und mit welchem Effizienzgrad eine keimreduzierende oder keimtötende Wirkung eintritt. Diese Methode lässt sich für die Untersuchung verschiedener Mikroben, Bakterien und Viren anwenden. Die Untersuchungen zum Wirkungsnachweis der erfindungsgemäßen Verbundmaterialien 10 erfolgten getrennt für die Referenzstämme Staphylococcus aureus (Sa, Suspension mit 10⁷ KBE/ml (Koloniebildende Einheiten pro Milliliter)), Escherichia coli (Ec, Suspension mit 10⁷ KBE/ml) und Pseudomonas aeroginosa (Pa, Suspension mit 10⁷ KBE/ml). Die Agarplatten wurden wie in Fig. 3 gezeigt in die drei Sektoren 20a-c unterteilt, wobei die Ergebnisse für Staphylococcus aureus im Sektor 20a, für Escherichia coli im Sektor 20b und für Pseudomonas aeroginosa im Sektor 20c erkennbar sind.

Das in Fig. 4 mit P1 bezeichnete Verbundmaterial 8 diente als Vergleich und umfasste als Trägermaterial 12 Polyacrylat und als antimikrobielles Agens 14 MoO₃. Das in Fig. 4 mit P2 bezeichnete Verbundmaterial 10 umfasste neben dem Trägermaterial 12 Polyacrylat und dem antimikrobiellen Agens 14 MοO₃ zusätzlich 2 % PEG als Hydrophilierungsmittel 18. Das in Fig. 4 mit P3 bezeichnete Verbundmaterial 10 umfasste neben dem Trägermaterial 12 Polyacrylat und dem antimikrobiellen Agens 14 MοO₃ zusätzlich 4 % PEG als Hydrophilierungsmittel 18.

Mit dem Symbol "Ø" ist zusätzlich eine Kontrolle aus Polyacrylat ohne antimikrobielles Agens 14 und ohne Hydrophilierungsmittel 18 bezeichnet.

In Fig. 4 ist erkennbar, dass die antimikrobielle Wirkung im Vergleich zur Kontrolle "Ø" bereits bei der aus dem Stand der Technik bekannten Probe P1 grundsätzlich vorhanden ist. In Abhängigkeit des Anteils an Hydrophilierungsmittel 18 kann diese antimikrobielle Wirkung bei den Proben P2 und P3 jedoch noch deutlich gesteigert werden, so dass in der Probe P3 bereits nach 9 Stunden praktisch keine Keime mehr nachweisbar sind.

Weitere Ausführungsbeispiele des Verbundmaterials 10 umfassen die folgenden Proben, die wie oben beschrieben auf ihre antimikrobielle Wirksamkeit untersucht wurden:
- Polypropylen (PP) + 2 Gew.-% MoO₃ + 2 Gew.-% Hydrophilierungsmittel;
- PP + 2 Gew.-% MοO₃ + 4 Gew.-% Hydrophilierungsmittel;
- PP + 2 Gew.-% MοO₃ + 6 Gew.-% Hydrophilierungsmittel;
- Polyethylen mit 2% MoO₃ (β-Phase) und 3 % Hydrophilierungsmittel
- Kunststoff K18 + 2% β-MoO₃ + 1% WO₃ + 2% Hydrophilierungsmittel Crodamide ER (Fettsäureamide)
- K18 + 2% β-MoO3 + 2% WO3 + 2% Hydrophilierungsmittel Hostastat (=Ethoxylierte Alkylamine)
- K18 + 2% β-MoO3 + 2% Hydrophilierungsmittel Crodamide ER
- K18 + 2% β-MoO3 + 2% Hydrophilierungsmittel Crodamide BR
- K18 + 2% β-MoO3 + 2% Hydrophilierungsmittel Sorbinsäure (=Hexadiensäure)
- PP + 2% WO₃ + 1% Hydrophilierungsmittel Crodafos MCA-SO (feste Cetyl Phosphatester)
- PP + 2% WO₃ + 1% Hydrophilierungsmittel Lubrophos LM-400E (=Ethoxylierte Nonylphenolphosphate)
- PP + 2% WO₃ + 1% Hydrophilierungsmittel Pluronic PE 8100 (= wenig schäumende, nichtionische Tenside, Block-Copolymere, in denen die zentrale Polypropylenglycol-Gruppe von zwei Polyethyleneglycol-Gruppen flankiert wird)
- PP + 2% WO₃ + 1% Hydrophilierungsmittel Surfynol 440 (=Ethoxyliertes Benetzungsmittel
- PP + 2% WO₃ + 1% Hydrophilierungsmittel Natriumdodecylsulfat
- PP + 2% calcinierte Molybdänsäure (AA) + 2% Hydrophilierungsmittel Orevac PP CA100 (Chemisch funktionalisiertes Polypropylen mit hohem Gehalt an gegraftetem Maleinsäureanhydrid)
- PP + 2% WO₃ + 1% Hydrophilierungsmittel Crodamol OHS (=Propylenglycolpolyethyleneglycol-3-isocetyletheracetat)
- PP + 2% WO₃ + 1% Hydrophilierungsmittel Pluronic PE 8100 (=nicht-ionisches Tensid)
- PP + 2% WO₃ + 1% Hydrophilierungsmittel Flerol KFC (=Polyglycolether)
- PP + 2% WO₃ + 1% Hydrophilierungsmittel BYK P4100 (=BYK-P 4100 ist ein Copolymer mit Säuregruppen, welches frei von Silikonen und Waxen ist)
- PP + 2% WO₃ + 1% Hydrophilierungsmittel Disperplast 1150 (=Polarer, saurer Ester von langkettigen Alkoholen)
- PP + 2% WO₃ + 1% Hydrophilierungsmittel Disperplast 1018 (=Copolymer mit pigmentaffinen Gruppen)
- PP + 2% MoO₃ + 1% Hydrophilierungsmittel Atmer 129MB (=Atmer 129 ist ein pflanzlicher Glycerolester)
- PP + 2% MoO₃ + 1% Hydrophilierungsmittel Palsgaard DMG0093 (=Palsgaard DMG 0093 ist ein Emulgator basierend auf destillierten Monoglyceriden von pflanzlichen Fettsäuren)

Weitere Beispiele umfassen:
- Thermoplastisches Polyurethan (TPU) 1180A + 2% ADT-304-100
- TPU 1180A + 2% ADT-CY-304-25
- TPU 1180A + 2% ADT-CY-304-75
- TPU 1180A + 2% ADT-402-140

Dabei bedeuten:
ADT = Diammoniumwolfram
CY = Zyklongetrocknet
X-Y = Calcinierungstemperaturverlauf in °C, beispielsweise 304-100=304 °C auf 100 °C

Alle Proben wurden auf ihre Wirksamkeit gegen S. aureus. (109 CFU/ml, 4 Stunden Inkubierung) getestet. Nach spätestens 12 Stunden waren bei allen Proben praktisch keine Keime mehr nachweisbar, wobei bei vielen Proben bereits nach etwa 3-6 Stunden keine Keime mehr nachweisbar waren.

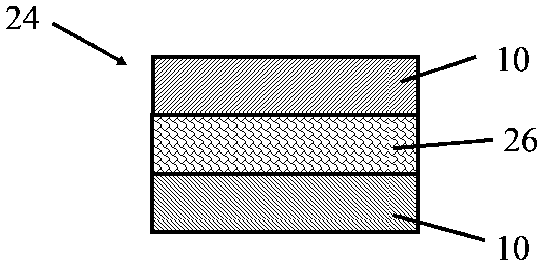

Fig. 5 zeigt eine schematische Schnittansicht einer grundsätzlich röhrenförmig ausgebildeten Verkleidung 24 für einen Kanal, beispielsweise für eine Wasser-, Ö1- oder Gas-Pipeline, wobei die Verkleidung 24 ein Schichtsystem mit - in Anzahl und Anordnung beispielhaft - drei Schichten enthält. Die obere und untere Schicht bestehen dabei aus dem Verbundmaterial 10 und umfassen im gezeigten Ausführungsbeispiel jeweils einen Kunststoff wie beispielsweise PVC, in welchem ein Molybdän- und/oder Wolframoxid als antimikrobiell wirksames Agens 14 sowie ein Hydrophilierungsmittel 18 eingearbeitet sind. Die einzelnen Schichten können dabei grundsätzlich gleich oder unterschiedlich ausgebildet sein. Zwischen den äußeren Schichten aus dem Verbundmaterial 10 befindet sich eine dazwischen liegende Verstärkungsschicht 26, die im gezeigten Ausführungsbeispiel ein textiles Gewebe, beispielsweise aus Kevlar enthält. Die Verstärkungsschicht 26 kann grundsätzlich ebenfalls antimikrobiell ausgestattet sein bzw. aus dem Verbundmaterial 10 bestehen, muss aber nicht aus dem Verbundmaterial 10 bestehen. Da sowohl die äußere als auch die innere Schicht aus dem erfindungsgemäßen Verbundmaterial 10 bestehen, können Mikroben sowohl an der Innen- als auch an der Außenseite der Verkleidung 24 bekämpft werden. Dies ist beispielsweise bei Öl-Pipelines von großem Vorteil, da hierdurch gleichzeitig die an der Innenseite der Pipeline anhaftenden Bakterien und die mit dem durchströmenden Öl mitgeführten Bakterien bekämpft werden können. Die Verkleidung 24 weist eine gewisse Flexibilität bzw. Verformbarkeit auf und kann auch maschinell als Innenverkleidung zur Reparatur und/oder zur antimikrobiellen Ausstattung in Kanäle, Pipelines und dergleichen eingebracht werden. Alternativ oder zusätzlich kann die Verkleidung 24 auch als Außenverkleidung für Kanäle, Pipelines und dergleichen verwendet werden.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verbundmaterial (10) mit wenigstens einem Trägermaterial (12) und wenigstens einem antimikrobiell wirksamen Agens (14) aus der Gruppe der Metalle und Metallverbindungen, wobei das Verbundmaterial (10) wenigstens ein Hydrophilierungsmittel (18) umfasst, welches die Benetzbarkeit der Oberfläche (15) des Verbundmaterials (10) mit Wasser im Vergleich zur Benetzbarkeit der Oberfläche (15) des Verbundmaterials (10) ohne Zusatz des Hydrophilierungsmittels (18) steigert,
**dadurch gekennzeichnet, dass**
das Verbundmaterial (10) wenigstens einen Schwefelfänger umfasst, wobei der Massenanteil des Schwefelfängers bezogen auf die Gesamtmasse des Verbundmaterials (10) zwischen 0,01 % und 0,5 % beträgt und der Schwefelfänger eine Calcium-, Zink-, Mangan-, Blei- und/oder Eisenverbindung umfasst.

2. Verbundmaterial (10) nach Anspruch 1,
**dadurch gekennzeichnet, dass**
das Massenverhältnis des Hydrophilierungsmittels (18) bezogen auf die Gesamtmasse des Verbundmaterials (10) zwischen 0,1 % und 22 % beträgt und/oder derart gewählt ist, dass ein Wassertropfen (16) auf der Oberfläche (15) des Verbundmaterials (10) einen Kontaktwinkel (α) kleiner 90° aufweist und/oder derart gewählt ist, dass der Kontaktwinkel (α) im Vergleich zum Kontaktwinkel (α) ohne Zusatz des Hydrophilierungsmittels (18) um mindestens 10° kleiner ist.

3. Verbundmaterial (10) nach Anspruch 1 oder 2,
**dadurch gekennzeichnet, dass**
das Trägermaterial (12) ausgewählt ist aus einer Gruppe, die organische Polymere, Silikone, Gläser, Keramiken, Wachse, Harze, Farben, Lacke, Textilien, Gewebe und/oder Holz umfasst.

4. Verbundmaterial (10) nach einem der Ansprüche 1 bis 3,
**dadurch gekennzeichnet, dass**
das antimikrobiell wirksame Agens (14) ein Metall, eine Metallverbindung und/oder eine Metalllegierung aus der oligodynamischen Reihe umfasst und/oder dass das Hydrophilierungsmittel ein organisches Hydrophilierungsmittel umfasst.

5. Verbundmaterial (10) nach einem der Ansprüche 1 bis 4,
**dadurch gekennzeichnet, dass**
das antimikrobiell wirksame Agens (14) ein Übergangsmetalloxid umfasst und/oder aus einem Übergangsmetalloxid erhältlich ist und/oder dass das antimikrobiell wirksame Agens (14) ausgewählt ist aus einer Gruppe, die Molybdän, Molybdänverbindungen, Wolfram und Wolframverbindungen umfasst.

6. Verbundmaterial (10) nach einem der Ansprüche 1 bis 5,
**dadurch gekennzeichnet, dass**
das antimikrobiell wirksame Agens (14) und/oder das Hydrophilierungsmittel (18) bei Kontakt mit einem wässrigen Medium als Protonendonator fungiert.

7. Verbundmaterial (10) nach einem der Ansprüche 1 bis 6,
**dadurch gekennzeichnet, dass**
das Hydrophilierungsmittel (18) ausgewählt ist aus einer Gruppe, die migrierende Additive, Alginate, Kollagen, Chitosan, Gelatine, Polyethylenglykol (PEG), Polyethylenglykolester, Polypropylenglykol (PPG), Polypropylenglykolester, Polycarboxylate, Polyacrylsäuren, Polysaccaride, Polymilchsäure (PLA), Humussäuren, Lignin, Maleinsäure, Erucasäure, Ölsäure, Stearate, Kie selgel, Zeolithe, Melasse, Polydextrose, Metallhydroxide, Aluminiumoxid, Copolymere mit Acrylsäure, Säureanhydride, Glykosaminoglykane, Alkylaminalkoholate, Methylenblau und/oder Methylenblau-Derivate umfasst.

8. Verbundmaterial (10) nach einem der Ansprüche 1 bis 7,
**dadurch gekennzeichnet, dass**
das antimikrobiell wirksame Agens (14) und/oder das Hydrophilierungsmittel (18) als Partikel mit einem mittleren Durchmesser zwischen 0,1 µm und 200 µm, insbesondere zwischen 1 µm und 10 µm, vorliegen.

9. Verbundmaterial (10) nach einem der Ansprüche 1 bis 8,
**dadurch gekennzeichnet, dass**
das antimikrobiell wirksame Agens (14) und/oder das Hydrophilierungsmittel (18) im Trägermaterial (12) verteilt und/oder als Beschichtung auf dem Trägermaterial (12) aufgebracht ist und/oder zumindest teilweise eine porige Struktur mit einer mittleren Porengröße zwischen 50 µm und 900 µm aufweist.

10. Verbundmaterial (10) nach einem der Ansprüche 1 bis 9,
**dadurch gekennzeichnet, dass**
dieses als Beschichtungsmittel, insbesondere als Anstrichmittel, Lack und/oder Anti-fouling-Anstrich, ausgebildet ist.

11. Verbundmaterial (10) nach einem der Ansprüche 1 bis 9,
**dadurch gekennzeichnet, dass**
der Massenanteil des antimikrobiell wirksamen Agens (14) bezogen auf die Gesamtmasse des Verbundmaterials (10) mindestens 0,1 %, vorzugsweise mindestens 1,0 % beträgt.

12. Verfahren zum Herstellen eines Verbundmaterials (10), bei welchem ein Trägermaterial (12) mit wenigstens einem antimikrobiell wirksamen Agens (14) aus der Gruppe der Metalle und Metallverbindungen sowie mit wenigstens einem Hydrophilierungsmittel (18), welches die Benetzbarkeit der Oberfläche (15) des Verbundmaterials (10) mit Wasser im Vergleich zur Benetzbarkeit der Oberfläche (15) des Verbundmaterials (10) ohne Zusatz des Hydrophilierungsmittels (18) steigert, versehen wird,
**dadurch gekennzeichnet, dass**
zum Herstellen des Verbundmaterials (10) wenigstens ein Schwefelfänger verwendet wird, wobei der Massenanteil des Schwefelfängers bezogen auf die Gesamtmasse des Verbundmaterials (10) zwischen 0,01 % und 0,5 % beträgt und der Schwefelfänger eine Calcium-, Zink-, Mangan-, Blei- und/oder Eisenverbindung umfasst.

13. Verfahren nach Anspruch 12,
**dadurch gekennzeichnet, dass**
das Trägermaterial (12) mit dem antimikrobiell wirksamen Agens (14) und/oder mit dem Hydrophilierungsmittel (18) beschichtet wird und/oder dass das antimikrobiell wirksame Agens (14) und/oder das Hydrophilierungsmittel (18) vorzugsweise gleichmäßig im Trägermaterial (12) verteilt wird.

14. Verwendung eines Verbundmaterials (10) gemäß einem der Ansprüche 1 bis 11 und/oder eines Verbundmaterials (10), welches mittels eines Verfahrens nach einem der Ansprüche 12 oder 13 erhältlich und/oder erhalten ist, zum Herstellen einer Verkleidung (24) für einen Kanal.

## Claims

1. Composite material (10) with at least one support material (12) and at least one antimicrobially effective agent (14) from the group of the metals and metal compounds, wherein the composite material (10) includes at least one hydrophilizing agent (18), which increases the wettability of the surface (15) of the composite material (10) with water compared to the wettability of the surface (15) of the composite material (10) without addition of the hydrophilizing agent (18),
**characterized in that**
the composite material (10) includes at least one sulfur scavenger, wherein the mass portion of the sulfur scavenger related to the total mass of the composite material (10) is between 0.01 % and 0.5 % and the sulfur scavenger includes a calcium, zinc, manganese, lead and/or iron compound.

2. Composite material (10) according to claim 1,
**characterized in that**
the mass ratio of the hydrophilizing agent (18) related to the total mass of the composite material (10) is between 0.1 % and 22 % and/or is selected such that a water drop (16) on the surface (15) of the composite material (10) has a contact angle (α) of less than 90° and/or is selected such that the contact angle (α) is smaller by at least 10° compared to the contact angle (α) without addition of the hydrophilizing agent (18).

3. Composite material (10) according to claim 1 or 2,
**characterized in that**
the support material (12) is selected from a group including organic polymers, silicones, glasses, ceramics, waxes, resins, paints, varnishes, textiles, fabrics and/or wood.

4. Composite material (10) according to any one of claims 1 to 3,
**characterized in that**
the antimicrobially effective agent (14) includes a metal, a metal compound and/or a metal alloy from the oligodynamic series and/or that the hydrophilizing agent includes an organic hydrophilizing agent.

5. Composite material (10) according to any one of claims 1 to 4,
**characterized in that**
the antimicrobially effective agent (14) includes a transition metal oxide and/or is obtainable from a transition metal oxide and/or that the antimicrobially effective agent (14) is selected from a group including molybdenum, molybdenum compounds, tungsten and tungsten compounds.

6. Composite material (10) according to any one of claims 1 to 5,
**characterized in that**
the antimicrobially effective agent (14) and/or the hydrophilizing agent (18) function as a proton donator upon contact with an aqueous medium.

7. Composite material (10) according to any one of claims 1 to 6,
**characterized in that**
the hydrophilizing agent (18) is selected from a group including migrating additives, alginates, collagen, chitosan, gelatin, polyethylene glycol (PEG), polyethylene glycolester, polypropylene glycol (PPG), polypropylene glycolester, polycarboxylates, polyacrylic acids, polysaccharides, polylactic acid (PLA), humic acids, lignin, maleic acid, erucic acid, oleic acid, stearates, silica gel, zeolites, molasses, polydextrose, metal hydroxides, aluminum oxide, copolymers with acrylic acids, acid anhydrides, glycosaminoglycans, alkylamine alcoholates, methylene blue and/or methylene blue derivatives.

8. Composite material (10) according to any one of claims 1 to 7,
**characterized in that**
the antimicrobially effective agent (14) and/or the hydrophilizing agent (18) are present as particles with an average diameter between 0.1 µm and 200 µm, in particular between 1 µm and 10 µm.

9. Composite material (10) according to any one of claims 1 to 8,
**characterized in that**
the antimicrobially effective agent (14) and/or the hydrophilizing agent (18) are distributed in the support material (12) and/or applied to the support material (12) as a coating and/or have at least partially a porous structure with an average pore size between 50 µm and 900 µm.

10. Composite material (10) according to any one of claims 1 to 9,
**characterized in that**
it is formed as a coating agent, in particular as a paint, varnish and/or anti-fouling paint.

11. Composite material (10) according to any one of claims 1 to 9,
**characterized in that**
the mass portion of the antimicrobially effective agent (14) related to the total mass of the composite material (10) is at least 0.1 %, preferably at least 1.0 %.

12. Method for producing a composite material (10), in which a support material (12) is provided with at least one antimicrobially effective agent (14) from the group of the metals and metal compounds as well as with at least one hydrophilizing agent (18), which increases the wettability of the surface (15) of the composite material (10) with water compared to the wettability of the surface (15) of the composite material (10) without addition of the hydrophilizing agent (18),
**characterized in that**
at least one sulfur scavenger is used for producing the composite material (10), wherein the mass portion of the sulfur scavenger related to the total mass of the composite material (10) is between 0.01 % and 0.5 % and the sulfur scavenger includes a calcium, zinc, manganese, lead and/or iron compound.

13. Method according to claim 12,
**characterized in that**
the support material (12) is coated with the antimicrobially effective agent (14) and/or with the hydrophilizing agent (18) and/or that the antimicrobially effective agent (14) and/or the hydrophilizing agent (18) are preferably uniformly distributed in the support material (12).

14. Use of a composite material (10) according to any one of claims 1 to 11, and/or of a composite material (10), which is obtainable and/or obtained by means of a method according to any one of claims 12 or 13, for producing a cladding (24) for a duct.

## Revendications

1. Matériau composite (10) avec au moins un matériau support (12) et au moins un agent actif sur le plan antimicrobien (14) dans le groupe des métaux et des composés métalliques, le matériau composite (10) comprenant au moins un agent d'hydrophilisation (18), lequel augmente la mouillabilité de la surface (15) du matériau composite (10) avec de l'eau, comparativement à la mouillabilité de la surface (15) du matériau composite (10) sans adjonction de l'agent d'hydrophilisation (18),
**caractérisé en ce que**
le matériau composite (10) comprend au moins un piège à soufre, la fraction massique du piège à soufre par rapport à la masse totale du matériau composite (10) se situant entre 0,01 % et 0,5 % et le piège à soufre comprenant un composé de calcium, de zinc, de manganèse, de plomb et / ou de fer.

2. Matériau composite (10) selon la revendication 1,
**caractérisé en ce que**
le rapport de masse de l'agent d'hydrophilisation (18) par rapport à la masse totale du matériau composite (10) se situe entre 0,1 % et 22 % et / ou est choisi de telle sorte qu'une goutte d'eau (16) sur la surface (15) du matériau composite (10) présente un angle de contact (α) inférieur à 90° et / ou est choisi de telle sorte que l'angle de contact (α) est inférieur d'au moins 10° comparativement à l'angle de contact (α) sans adjonction de l'agent d'hydrophilisation (18).

3. Matériau composite (10) selon la revendication 1 ou 2,
**caractérisé en ce que**
le matériau support (12) est sélectionné dans un groupe qui comprend des polymères organiques, des silicones, des verres, des céramiques, des cires, des résines, des peintures, des vernis, des textiles, des tissus et / ou du bois.

4. Matériau composite (10) selon l'une des revendications 1 à 3,
**caractérisé en ce que**
l'agent actif sur le plan antimicrobien (14) comprend un métal, un composé métallique et / ou un alliage métallique de la gamme oligodynamique et / ou que l'agent d'hydrophilisation comprend un agent d'hydrophilisation organique.

5. Matériau composite (10) selon l'une des revendications 1 à 4,
**caractérisé en ce que**
l'agent actif sur le plan antimicrobien (14) comprend un oxyde de métal de transition et / ou qu'il est disponible à partir d'un oxyde de métal de transition et / ou que l'agent actif sur le plan antimicrobien (14) est sélectionné dans un groupe qui comprend du molybdène, des composés de molybdène, du tungstène et des composés de tungstène.

6. Matériau composite (10) selon l'une des revendications 1 à 5,
**caractérisé en ce que**
l'agent actif sur le plan antimicrobien (14) et / ou l'agent d'hydrophilisation (18) agit, en cas de contact avec un milieu aqueux, comme donneur de protons.

7. Matériau composite (10) selon l'une des revendications 1 à 6,
**caractérisé en ce que**
l'agent d'hydrophilisation (18) est sélectionné dans un groupe qui comprend des additifs migrants, des alginates, du collagène, du chitosane, de la gélatine, du polyéthylène glycol (PEG), de l'ester de polyéthylène glycol, du polypropylène glycol (PPG), de l'ester de polypropylène glycol, du polycarboxylate, des acides polyacryliques, des polysaccharides, de l'acide polylactique (PLA), des acides humiques, de la lignine, de l'acide maléique, de l'acide érucique, de l'acide oléique, des stéarates, des gels de silice, des zéolithes, de la mélasse, du polydextrose, des hydroxydes de métaux, de l'oxyde d'aluminium, des copolymères avec de l'acide acrylique, des anydrides d'acide, des glycosaminoglycanes, des alcoolates d'alkylamine, du bleu de méthylène et / ou des dérivés de bleu de méthylène.

8. Matériau composite (10) selon l'une des revendications 1 à 7,
**caractérisé en ce que**
l'agent actif sur le plan antimicrobien (14) et / ou l'agent d'hydrophilisation (18) sont présents en tant que particules avec un diamètre moyen entre 0,1 µm et 200 µm, en particulier entre 1 µm et 10 µm.

9. Matériau composite (10) selon l'une des revendications 1 à 8,
**caractérisé en ce que**
l'agent actif sur le plan antimicrobien (14) et / ou l'agent d'hydrophilisation (18) est réparti dans le matériau support (12) et / ou appliqué en tant que revêtement sur le matériau support (12) et / ou présentent au moins en partie une structure poreuse avec une taille moyenne de pore entre 50 µm et 900 µm.

10. Matériau composite (10) selon l'une des revendications 1 à 9,
**caractérisé en ce que**
celui-ci est constitué en tant que moyen de revêtement, en particulier en tant que produit de peinture, vernis et / ou peinture anti-salissure.

11. Matériau composite (10) selon l'une des revendications 1 à 9,
**caractérisé en ce que**
la fraction massique de l'agent actif sur le plan antimicrobien (14) par rapport à la masse totale du matériau composite (10) est d'au moins 0,1 %, de préférence d'au moins 1,0 %.

12. Procédé de fabrication d'un matériau composite (10), pour lequel un matériau support (12) est doté d'au moins un agent actif sur le plan antimicrobien (14) du groupe des métaux et des composés métalliques, ainsi que d'au moins un agent d'hydrophilisation (18), lequel augmente la mouillabilité de la surface (15) du matériau composite (10) avec de l'eau comparativement à la mouillabilité de la surface (15) du matériau composite (10) sans adjonction de l'agent d'hydrophilisation (18),
**caractérisé en ce**
**qu'**au moins un piège à soufre est utilisé pour la fabrication du matériau composite (10), la fraction massique du piège à soufre par rapport à la masse totale du matériau composite (10) se situant entre 0,01 % et 0,5 % et le piège à soufre comprend un composé de calcium, de zinc, de manganèse, de plomb et / ou de fer.

13. Procédé selon la revendication 12,
**caractérisé en ce que**
le matériau support (12) est revêtu avec l'agent actif sur le plan antimicrobien (14) et / ou avec l'agent d'hydrophilisation (18) et / ou que l'agent actif sur le plan antimicrobien (14) et / ou l'agent d'hydrophilisation (18) est réparti de préférence de manière régulière dans le matériau support (12).

14. Utilisation d'un matériau composite (10) conformément à l'une des revendications 1 à 11 et / ou d'un matériau composite (10), lequel est disponible et / ou obtenu au moyen d'un procédé selon l'une des revendications 12 ou 13, pour la fabrication d'un revêtement (24) pour un canal.
